# EUROPEAN PATENT APPLICATION

(11) **EP 4 446 608 A1**
(43) Date of publication of application: **16.10.2024**
(21) Application number: 24166648.6
(22) Date of filing: 27.03.2024
(51) Int. Cl.: F16D 55/224

(54) **CALIPER ASSEMBLY WITH AXIALLY OFFSET LINE OF ACTION BRAKING ASSEMBLIES**

(30) Priority: 10.04.2023 US 202318132494
(71) Applicant: HB Performance Systems, Inc., Mequon, WI 53092 (US)
(72) Inventor: TRUE, Peter E., Wisconsin, 53092 (US); PFEIL, Lee, Wisconsin, 53092 (US); FIACCHINO, Steve, Wisconsin, 53092 (US); SCHLINTZ, John, Wisconsin, 53092 (US); HAMMOND, Andrew, Wisconsin, 53092 (US); HENDRICKS, Clay, Wisconsin, 53092 (US); OREFICE, Michele, Wisconsin, 53092 (US)
(74) Representative: Forresters IP LLP

(57) **Abstract**

A caliper assembly for applying braking forces to brake pads and a brake rotor including a first braking assembly with an axial line of action, a second braking assembly with an axial line of action offset from the axial line of action of the first brake assembly and a load transfer device for transferring a clamping force from the second braking assembly to the first braking assembly.

## Description

### FIELD OF THE INVENTION

The present invention relates to a caliper assembly and, more specifically, to a caliper assembly having axially offset line of action braking assemblies.

### BACKGROUND OF THE INVENTION

Typically, two separate brake calipers for service and park braking are mounted on the same rotor. For example, a hydraulic park brake such as a spring apply hydraulic release (SAHR) is generally mounted axially in line with a hydraulic service piston. With the location of the brake rotor on the axle assembly, the amount of space between the rotor and the axle gear housing is limited and commonly does not allow for enough room to fit both the service piston and the SAHR components in line with each other. Increasing the rotor diameter would assist in providing more room but is not desirable due to reducing the vehicle ground clearance.

### SUMMARY OF THE INVENTION

In one construction, the disclosure provides a caliper assembly comprising a first braking assembly with an axial line of action, a second braking assembly with an axial line of action offset from the axial line of action of the first brake assembly and a load transfer device for transferring a mechanical force from the second braking assembly to the first braking assembly.

In another construction, the disclosure provides a caliper assembly comprising a dynamic braking assembly having an axial line of action, a static braking assembly having an axial line of action that is offset from the axial line of action of the service braking assembly and a linkage connecting the service brake assembly and the static brake assembly.

In another construction, the disclosure provides a caliper assembly comprising a housing, a hydraulic service brake assembly in the housing having an axial line of action, a SAHR park brake assembly in the housing having an axial line of action offset from axial line of action of the hydraulic service brake assembly and a mechanical linkage in the housing and adapted to transfer a mechanical force from the SAHR park brake assembly to the hydraulic service brake assembly.

Other aspects of the disclosure will become apparent by consideration of the detailed description and accompanying drawings.

### BRIEF DESCRIPTION OF THE DRAWINGS

FIG. 1 is a perspective view of a caliper assembly with axially offset line of action braking assemblies according to the invention.
FIG. 2 is a perspective view of the caliper assembly.
FIG. 3 is a side view of the caliper assembly installed on an axle.
FIG. 4 is an exploded view of the caliper assembly.
FIG. 5 is an end view of the caliper assembly.
FIG. 6 is a sectional view taken along line 6-6 of FIG. 5.
FIG. 7 is a perspective view of a second embodiment of the caliper assembly with axially offset line of action braking assemblies according to the invention.
FIG. 8 is a perspective view of the second embodiment of the caliper assembly.
FIG. 9 is a side view of the second embodiment of the caliper assembly installed on an axle.
FIG. 10 is an exploded view of the second embodiment of the caliper assembly.
FIG. 11 is an end view of the second embodiment of the caliper assembly.
FIG. 12 is a sectional view taken along line 12-12 of FIG. 11.

### DETAILED DESCRIPTION OF THE INVENTION

Before any constructions of the disclosure are explained in detail, it is to be understood that the disclosure is not limited in its application to the details of construction and the arrangement of components set forth in the following description or illustrated in the following drawings. The disclosure is capable of other constructions and of being practiced or of being carried out in various ways.

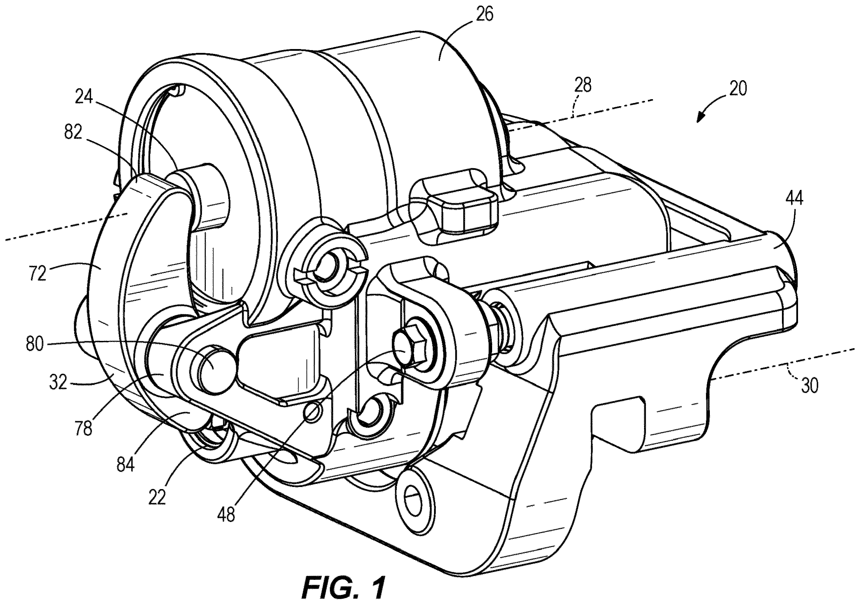

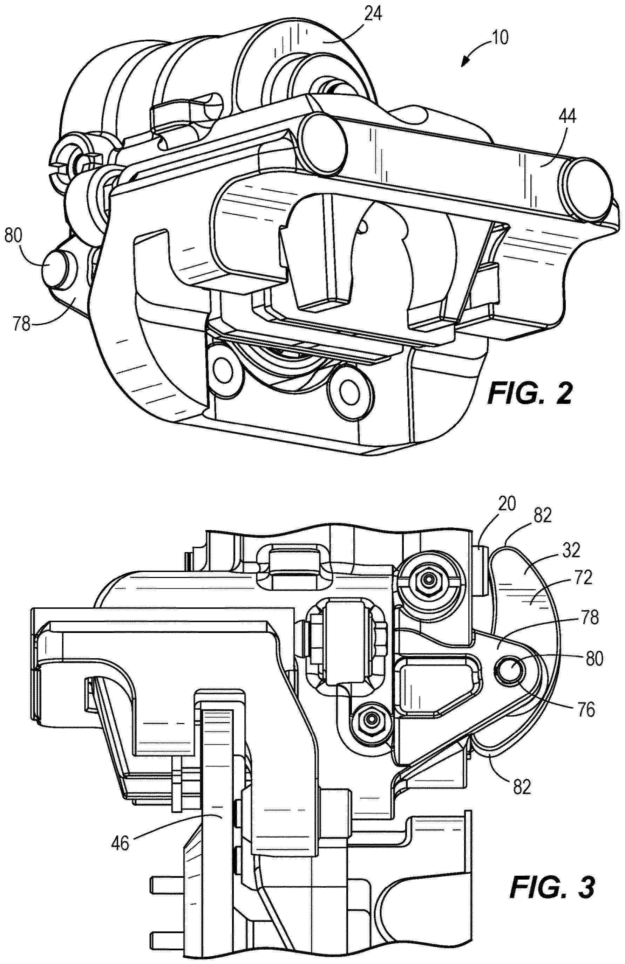

FIGS. 1 and 2 illustrate a caliper assembly 20 for mounting to a driveshaft such as on an axle of a vehicle having brake pads and a rotor, however, other mountings are also possible. The caliper assembly 20 includes a first braking assembly 22 and a second braking assembly 24 as one unit. Preferably, the first braking assembly 22 and the second braking assembly 24 are housed in a housing 26. The first braking assembly 22 has an axial line of action 28 that is offset, and thus not in line, from the axial line of action of the second braking assembly 24. Preferably, the axial line of action 30 is positioned above the axial line of action 28, however, other offset orientations can be utilized. The first braking assembly 22 is operationally connected to the second braking assembly 24 via a load transfer device 32. The braking clamp load from the second braking assembly 24 is applied to the first braking assembly 22 via the load transfer device 32.

The first braking assembly 22 can be any type of braking assembly such as a hydraulic braking assembly for dynamic service braking applications. The axial line of action 28 is in line with a piston 34.

The second braking assembly 24 can be any type of braking assembly such as a static braking assembly for park brake applications or emergency braking applications. The axial line of action 30 is in line with a piston 36. In the drawings, the second braking assembly 24 is a spring apply hydraulic release (SAHR) braking assembly. The second braking assembly 24 can allow for a wide variation of hydraulic pressure limits to be able to release the brake. A cover 38 over the rear portion of the housing 26 is intended to prevent any debris from affecting the performance of the second braking assembly 24.

The housing 26 can be cast from either ferrous or non-ferrous metal material.

The load transfer device 32 as shown in the drawings is a linkage, and more specifically is a mechanical linkage such as a rocker arm. The rocker arm is preferably made from steel to provide the proper strength needed to transfer the load, however, other materials can also be utilized. The load transfer device 32 could also be a mechanical lever, a cable or a gear and could also include electric, hydraulic or pneumatic actuation.

The load transfer 32 device enables the clamping forces from the second braking assembly 24 to be transferred through the load transfer device 32 to the piston 34 of the first braking assembly 22 to apply a braking force to the brake pads and brake rotor of the vehicle. The load transfer device 32 provides an advantage by allowing the use of a smaller piston diameter 34 and spring forces to achieve the same clamp load when compared to having both braking assemblies 22, 24 axially in line with each other. The required clamp load is able to be reduced due to being able to take advantage of the load transfer device 32.

Specifically, the load transfer device 32 pushes on the piston shaft 40 of the first braking assembly 22 to transfer the clamping force. The shaft 40 is threaded into the first braking assembly 22 with an adjuster nut 42 to allow the piston 34 of the first braking assembly 22 to advance as the brake pads wear and allow the first braking assembly 22 to achieve the required clamp load when applied.

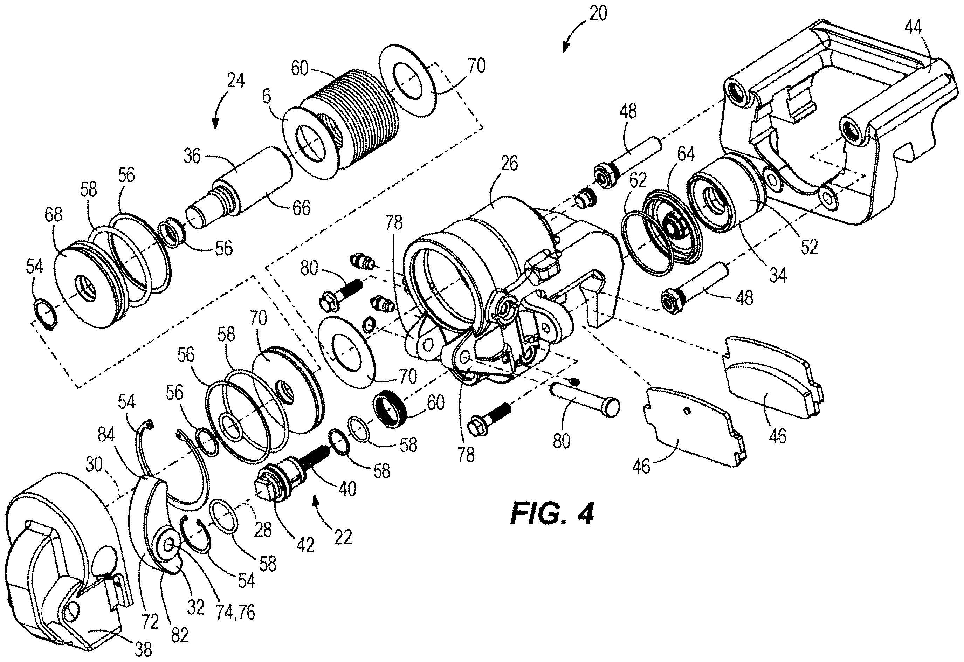

With reference to FIG. 4, the caliper assembly 20 is shown in an exploded view. A bracket 44 is shown for mounting the caliper assembly 20 to a vehicle with bolts 48 as is known in the art, the vehicle having brake pads 46.

The housing 26 is shown supporting the first braking assembly 22 having an axial line of action 28. The first braking assembly 22 includes the piston 34 comprised of the shaft 40, a subassembly 52 and the adjuster nut 42. Various retaining rings 54, back up rings 56, O rings 58, a spring 60, a seal 62 and a bolt 64 are also utilized.

The housing 26 is shown supporting the second braking assembly 24 having an axial line of action 30 that is offset from the axial line of action 28 of the first braking assembly 22. The second braking assembly 24 includes the piston 36 comprised of a shaft 66 and a subassembly 68. Various retaining rings 54, O-rings 58, a spring 60, and shims 70 are utilized.

The load transfer device 32, shown as a rocker arm in the drawings, includes a body 72 having a generally central pivot bore 74 defining a pivot point 76. The load transfer device 32 is mounted to the housing 26 at the housing mounting arms 78 using pins 80. One end 82 of the load transfer device 32 contacts the piston 34 on the first braking assembly 22 and the other end 84 contacts the piston 36 on the second braking assembly 24. In this orientation, the pivot point 76 is between the points the load transfer device 32 contacts the first braking assembly 22 and the second braking assembly 24. The cover 38 protects the load transfer device 32 and is mountable to the housing 26 using the pivot pins 80.

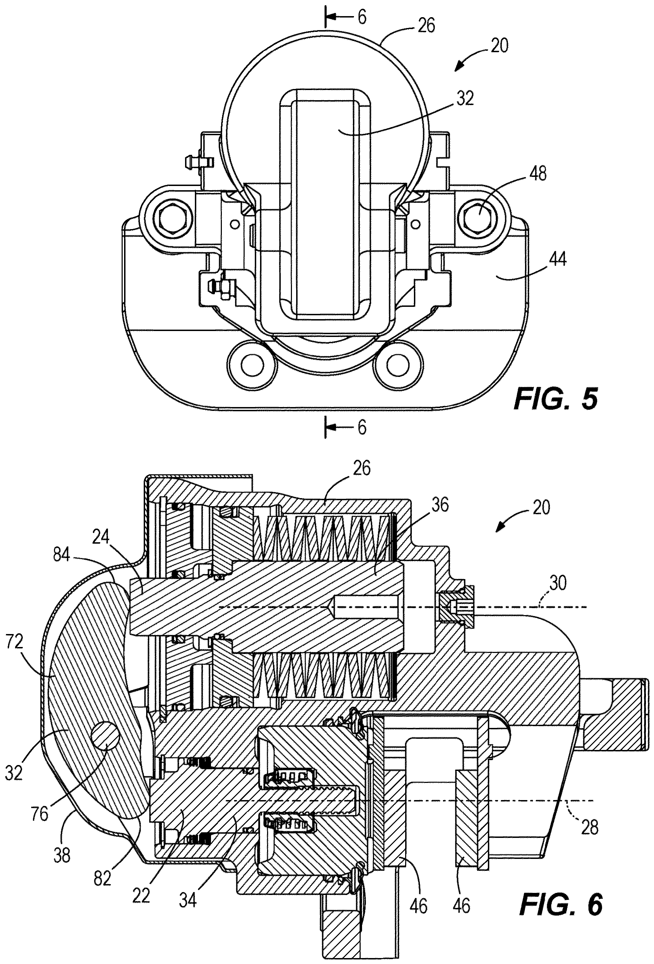

With reference to FIG. 5, the caliper assembly 20 is shown assembled in an end view and, with reference to FIG. 6, is shown assembled in a sectional view.

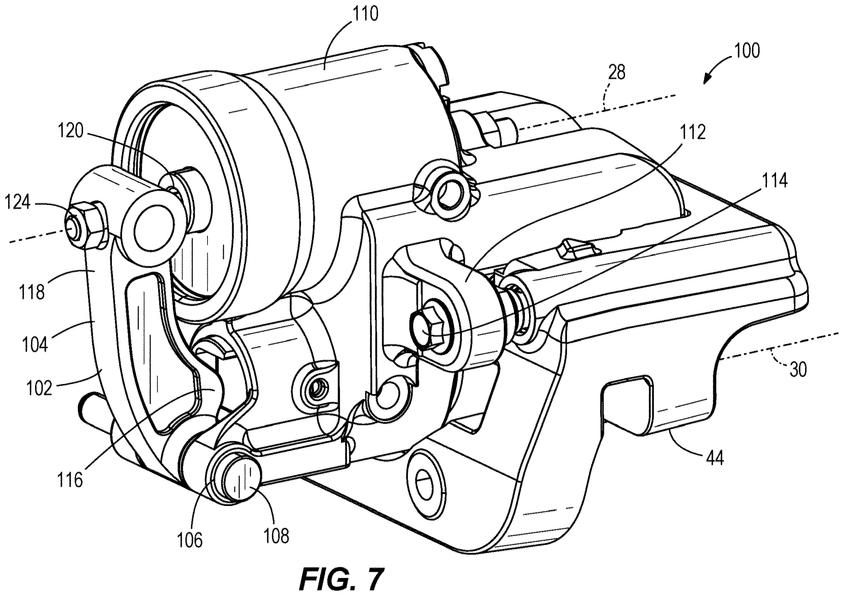

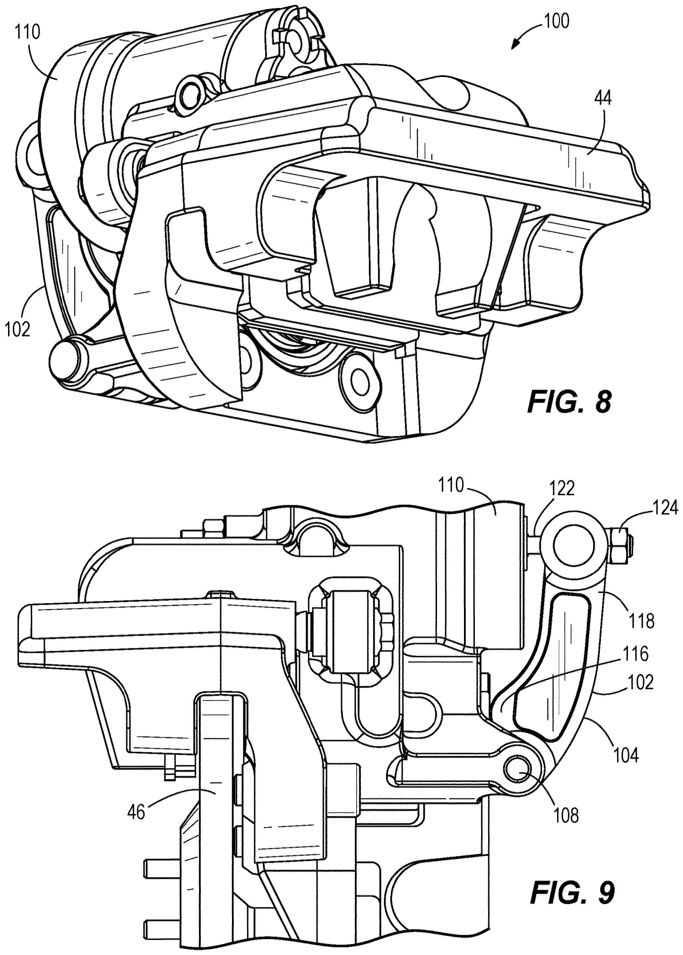

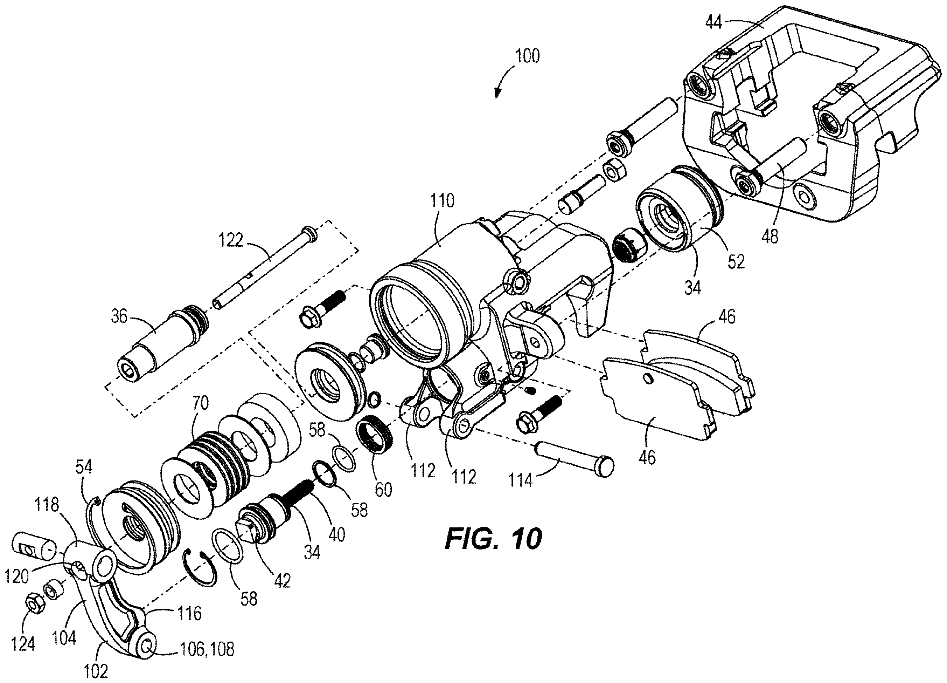

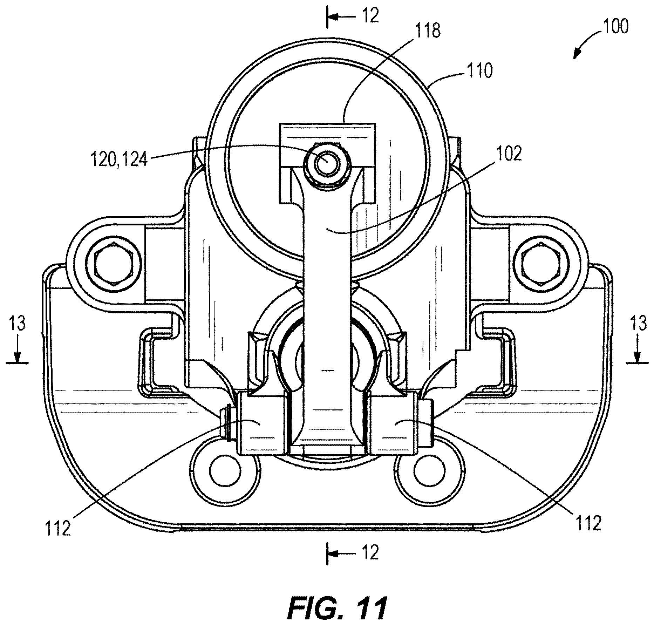

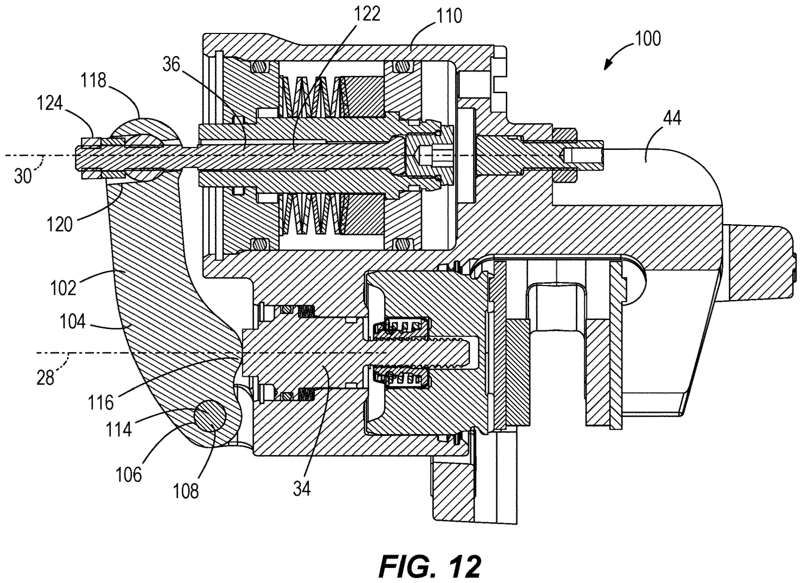

Referring now to FIGS. 7-12, a second embodiment of the caliper assembly 100 is shown wherein like components have like reference numbers with respect to the first embodiment. In this embodiment, the pivot point of the load transfer device 102 is not centrally located as with the first embodiment. The load transfer device 102, shown as a rocker arm, includes a body 104 having a pivot bore 106 defining the pivot point 108. The load transfer device 102 is mounted to a housing 110 at housing mounting arms 112 using pins 114. A bump out portion 116 contacts the first braking assembly 24. An end 118 of the load transfer device 102 includes a bore 120 through which a pin 122 is secured, such as with nuts 124 for example. The pin 122 is positioned internally of the piston 34. The clamping loads from the second braking assembly 24 are thus transferable to the piston 34 of the first braking assembly 24.

Various features and advantages of the invention are set forth in the following claims.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

### Preferred features of the invention:

1. A caliper assembly comprising:
   a first braking assembly with an axial line of action;
   a second braking assembly with an axial line of action offset from the axial line of action of the first brake assembly; and
   a load transfer device for transferring a mechanical force from the second braking assembly to the first braking assembly.
2. A caliper assembly of clause 1 and further including a housing, wherein the first brake assembly, the second brake assembly and the load transfer device are housed in the housing.
3. A caliper assembly of clause 1 wherein the first braking assembly is hydraulic.
4. A caliper assembly of clause 1 wherein the second braking assembly is hydraulic.
5. A caliper assembly of clause 1 wherein the second braking assembly is a SAHR brake assembly.
6. A caliper assembly of clause 1 wherein the first brake assembly is a dynamic service brake assembly.
7. A caliper assembly of clause 1 wherein the second braking assembly is a static brake assembly.
8. A caliper assembly of clause 1 wherein the second brake assembly is a park brake assembly.
9. A caliper assembly of clause 1 wherein the load transfer device acts via one of mechanically, hydraulically and pneumatically.
10. A caliper assembly of clause 1 wherein the load transfer device is a mechanical linkage.
11. A caliper assembly of clause 10 wherein the mechanical linkage is at least one of an arm, a lever, a cable and a gear.
12. A caliper assembly of clause 1 wherein the load transfer device is a rocker arm.
13. A caliper assembly comprising:
   a dynamic braking assembly having an axial line of action;
   a static braking assembly having an axial line of action that is offset from the axial line of action of the service braking assembly; and
   a linkage connecting the service brake assembly and the static brake assembly.
14. A caliper assembly of clause 13 and further including a housing, wherein the dynamic braking assembly, the static braking assembly and the linkage are housed in the housing.
15. A caliper assembly of clause 13 wherein each of the dynamic braking assembly and the static brake assembly are hydraulic.
16. A caliper assembly of clause 13 wherein the linkage is at least one of a mechanical, hydraulic and pneumatic type.
17. A caliper assembly of clause 13 wherein the linkage is a mechanical linkage.
18. A caliper assembly of clause 18 wherein the mechanical linkage is a rocker arm.
19. A caliper assembly of clause 13 wherein the linkage is adapted to transfer a mechanical clamping force from the static braking assembly to the dynamic braking assembly to enable the dynamic braking assembly to apply a braking force.
20. A caliper assembly comprising:
   a housing;
   a hydraulic service brake assembly in the housing having an axial line of action;
   a SAHR park brake assembly in the housing having an axial line of action offset from axial line of action of the hydraulic service brake assembly; and
   a mechanical linkage in the housing and adapted to transfer a mechanical force from the SAHR park brake assembly to the hydraulic service brake assembly.

## Claims

1. A caliper assembly comprising:
a first braking assembly with an axial line of action;
a second braking assembly with an axial line of action offset from the axial line of action of the first brake assembly; and
a load transfer device for transferring a mechanical force from the second braking assembly to the first braking assembly.

2. A caliper assembly of claim 1 and further including a housing, wherein the first brake assembly, the second brake assembly and the load transfer device are housed in the housing.

3. A caliper assembly of claim 1 wherein the first braking assembly is hydraulic.

4. A caliper assembly of claim 1 or 2 wherein the second braking assembly is hydraulic.

5. A caliper assembly of any one of claims 1 to 3, wherein the second braking assembly is a SAHR brake assembly.

6. A caliper assembly of claim 1 wherein the first brake assembly is a dynamic service brake assembly.

7. A caliper assembly of any one of claims 1 to 3 or 6, wherein the second braking assembly is a static brake assembly.

8. A caliper assembly of any one of claims 1 to 3 or 6 wherein the second brake assembly is a park brake assembly.

9. A caliper assembly of any preceding claim wherein the load transfer device acts via one of mechanically, hydraulically and pneumatically.

10. A caliper assembly of any preceding claim wherein the load transfer device is a mechanical linkage.

11. A caliper assembly of claim 10 wherein the mechanical linkage is at least one of an arm, a lever, a cable and a gear.

12. A caliper assembly of any one of claims 1 to 9 wherein the load transfer device is a rocker arm.

13. A caliper assembly according to claim 1, wherein:
the first braking assembly is a dynamic braking assembly;
the second braking assembly is a static braking assembly; and
the load transfer device is a linkage connecting the service brake assembly and the static brake assembly.

14. A caliper assembly of claim 13 and further including a housing, wherein the dynamic braking assembly, the static braking assembly and the linkage are housed in the housing.

15. A caliper assembly according to claim 1, further comprising a housing, and wherein:
the first braking assembly is a hydraulic service brake assembly in the housing;
the second braking assembly is a SAHR park brake assembly in the housing; and
the load transfer device is a mechanical linkage in the housing and adapted to transfer a mechanical force from the SAHR park brake assembly to the hydraulic service brake assembly.
